Europäisches Patentamt

European Patent Office

Office européen des brevets

(19)

(11) EP 0 678 962 B1

(12) **FASCICULE DE BREVET EUROPEEN**

(45) Date de publication et mention
de la délivrance du brevet:
**09.06.1999 Bulletin 1999/23**

(51) Int Cl.⁶: **H02H 6/00**

(21) Numéro de dépôt: **95410025.1**

(22) Date de dépôt: **04.04.1995**

(54) **Déclencheur électronique comportant un dispositif de mémorisation**

Elektronischer Auslöser mit Speichervorrichtung

Electronic trip device with storage device

(84) Etats contractants désignés:
**DE ES GB IT**

(30) Priorité: **21.04.1994 FR 9404923**

(43) Date de publication de la demande:
**25.10.1995 Bulletin 1995/43**

(73) Titulaire: **SCHNEIDER ELECTRIC SA**
**92100 Boulogne Billancourt (FR)**

(72) Inventeurs:
• **Durif, Ghislain**
**F-38050 Grenoble Cedex 09 (FR)**

• **Morfey, Allistair**
**F-38050 Grenoble Cedex 09 (FR)**

(74) Mandataire: **Jouvray, Marie-Andrée et al**
**Schneider Electric SA,**
**Sce. Propriété Industrielle**
**38050 Grenoble Cédex 09 (FR)**

(56) Documents cités:
**EP-A- 0 075 296       DE-A- 3 606 287**
**FR-A- 2 212 668**

## Description

L'invention concerne un déclencheur électronique comportant un ensemble de traitement, produisant un ordre de déclenchement lorsque des courants d'un réseau à protéger dépassent des seuils prédéterminés pendant des temps prédéterminés, et un dispositif de mémorisation d'un déclenchement connecté à l'ensemble de traitement.

Dans les déclencheurs électroniques connus, les fonctions de déclenchement fournissent un ordre d'ouverture du disjoncteur lorsqu'au moins un courant qui traverse un pôle du disjoncteur dépasse un seuil de courant prédéterminé pendant un temps supérieur à celui correspondant à la courbe de déclenchement. Parmi ces fonctions, nous pouvons citer la fonction long retard, ou fonction thermique, et la fonction court retard ou fonction magnétique.

La fonction long retard a un seuil qui correspond au courant de réglage du disjoncteur et une temporisation de déclenchement généralement inversement proportionnelle au carré du courant de défaut. En fonctionnement normal, disjoncteur fermé, la fonction long retard simule l'échauffement et le refroidissement d'un réseau à protéger en faisant varier une grandeur représentative de l'état thermique. Après l'ouverture du disjoncteur, la fonction long retard ne fonctionne plus, dans le cas d'un déclencheur auto-alimenté, et la simulation du comportement thermique n'est plus assurée.

La fermeture du disjoncteur initialise la grandeur représentative de l'état thermique à une valeur minimale et ne tient pas compte de l'échauffement avant ouverture du disjoncteur et du refroidissement pendant l'ouverture. Cette situation peut être dommageable pour le réseau si l'ouverture a été provoquée par un déclenchement en défaut long retard et que le disjoncteur est refermé sur une surcharge, sans délai de refroidissement.

Pour remédier à ces inconvénients, certains déclencheurs électroniques connus comportent des dispositifs de mémorisation du type de défaut indiquant l'état thermique avant le déclenchement, et des dispositifs de mesure du temps écoulé entre le déclenchement et l'enclenchement du disjoncteur.

Les dispositifs connus de mémorisation et de mesure du temps comportent généralement un circuit d'alimentation assurant leur fonctionnement pendant l'état ouvert du disjoncteur. De manière connue, les circuit d'alimentation comportent des condensateurs, des accumulateurs ou des piles pour conserver l'énergie électrique de fonctionnement.

Les composants électroniques pour la réalisation de ces dispositifs sont coûteux et volumineux, ils deviennent incompatibles avec des déclencheurs électroniques très intégrés pouvant être installés dans des disjoncteurs de faibles dimensions. En outre, la fiabilité des composants, notamment des circuits d'alimentation, se détériore rapidement avec le temps et l'augmentation de la température ambiante des disjoncteurs.

EP-A-0 075 296 divulgue un déclencheur conforme au préambule de la revendication 1, comprenant un condensateur qui est chargé avant déclenchement pour mémoriser l'état thermique, et une résistance connectée en parallèle avec le condensateur pour le décharger après déclenchement. Lors de la mise en service du déclencheur un convertisseur analogique- numérique mesure la tension aux bornes du circuit de mémorisation constitué par le condensateur et la résistance en parallèle.

L'invention a pour but un dispositif de mémorisation de l'état thermique d'un réseau à protéger, économique et fiable, pour des déclencheurs électroniques.

Selon l'invention ce but est atteint par le fait que le circuit de mémorisation comporte en outre une diode connectée en série avec le condensateur et la résistance entre deux bornes du circuit de mémorisation, et que le spositif de mémorisation comporte des moyens d'injection d'un courant faible pour charger condensateur lors de la mise en service du déclencheur.

Selon un mode de réalisation de l'invention le circuit de mémorisation est enrobé dans un matériau isolant.

Selon un mode de réalisation préférentiel le dispositif de mémorisation comporte des moyens de comparaison entre un seuil de tension prédéterminé et la tension aux bornes du circuit de mémorisation.

Pour réduire la consommation électrique du dispositif, le seuil de tension prédéterminé est généré en même temps que l'injection du courant faible.

L'ensemble de traitement comporte des moyens d'initialisation d'une grandeur, représentative de l'état thermique du réseau à protéger, à une valeur minimale si, à la mise en service du déclencheur, la tension aux bornes du circuit de mémorisation est inférieure au seuil prédéterminé, et à une valeur intermédiaire, supérieure à la valeur minimale, si la tension aux bornes du circuit de mémorisation est supérieure au seuil prédéterminé. Le dispositif de mémorisation comporte des moyens de compensation de la chute de tension dans la diode du circuit de mémorisation.

Dans un mode particulier de réalisation, le condensateur est du type à film plastique.

Selon un premier développement de l'invention, le dispositif comporte une pluralité de moyens de comparaison ayant des seuils prédéterminés différents, la grandeur représentative de l'état thermique étant initialisée à différentes valeurs selon le résultat des comparaisons.

Selon un second développement de l'invention, le dispositif comporte un convertisseur analogique- numérique pour mesurer la tension aux bornes du circuit de mémorisation.

D'autres avantages et caractéristiques ressortiront plus clairement de la description qui va suivre, de modes particuliers de réalisation de l'invention, donnés à titre d'exemples non limitatifs, et représentés aux dessins annnexés sur lesquels :

La figure 1 représente un schéma-bloc simplifié d'un disjoncteur dans lequel un déclencheur comportant l'invention peut être mis en oeuvre.

La figure 2 représente le schéma d'un dispositif de mémorisation selon un mode de réalisation de l'invention.

La figure 3 montre un mode de réalisation d'un circuit de mémorisation pouvant être utilisé dans un dispositif selon la figure 2.

La figure 4 représente le schéma d'un développement du mode de réalisation de la figure 2.

La figure 5 illustre la courbe de décharge du condensateur du circuit de mémorisation de la figure 3.

La figure 6 illustre l'initialisation et les variations de la grandeur représentative de l'état thermique.

Les figures 7 et 8 montrent des organigrammes du fonctionnement d'un dispositif de mémorisation selon les figures 2 et 4.

La figure 9 montre un développement d'un dispositif selon l'invention comportant une pluralité de comparateurs.

La figure 10 montre un autre développement d'un dispositif selon l'invention comportant un convertisseur analogique-numérique.

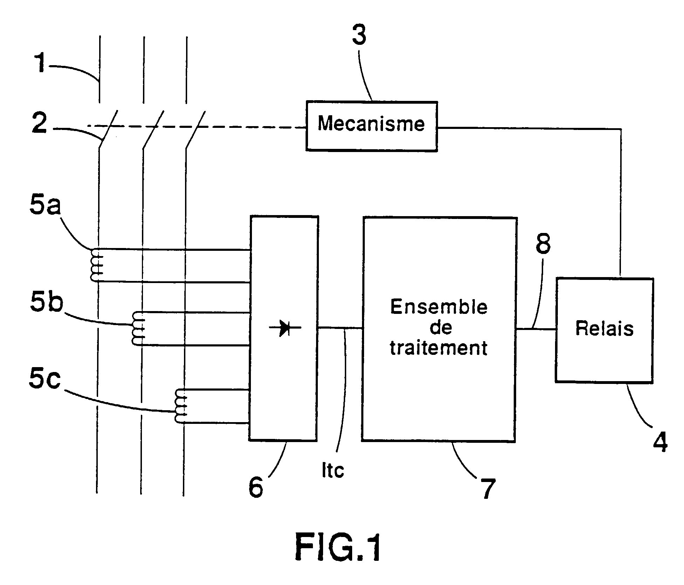

La figure 1 représente le schéma-bloc d'un disjoncteur de type connu. Le réseau électrique 1 à protéger est composé de conducteurs électriques. Des contacts 2 permettent d'établir ou d'interrompre le courant dans le réseau 1. Des transformateurs de courant 5a, 5b, 5c associés aux conducteurs du réseau 1 transforment les courants primaires de forte intensité en courants secondaires de faibles valeurs compatibles avec les déclencheurs électroniques. Ces courants secondaires sont appliqués à l'entrée d'un circuit 6 de mise en forme et de mesure. Celui-ci fournit en sortie des signaux représentatifs Itc appliqués à l'entrée d'un ensemble électronique 7 de traitement. Un ordre de déclenchement 8 produit par l'ensemble de traitement 7 est appliqué à l'entrée d'un relais de commande 4 qui actionne un mécanisme 3 d'ouverture des contacts 2 du disjoncteur.

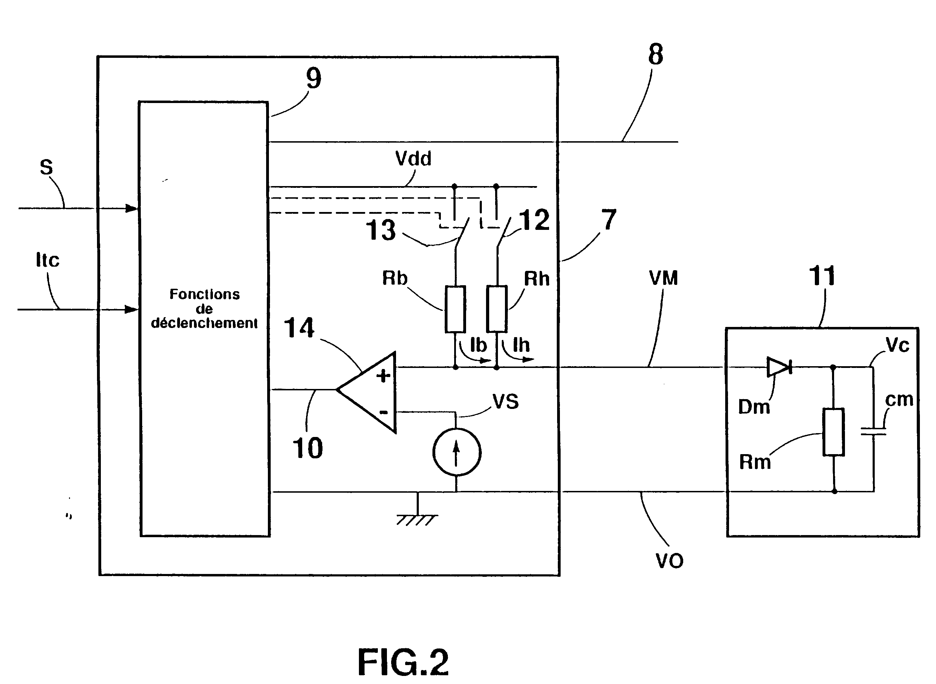

Sur la figure 2 un dispositif de mémorisation, selon un mode de réalisation de l'invention, est associé à l'ensemble de traitement 7. Un circuit 9 comportant des fonctions de déclenchement est intégré à l'ensemble de traitement 7. Il reçoit les valeurs Itc représentatives des courants du réseau à protéger et des paramètres S correspondant notamment à des seuils de courants et à des temporisations. Le circuit 9 fournit l'ordre de déclenchement 8. Un signal 10, venant du dispositif de mémorisation et représentatif de l'état thermique du réseau à protéger, est fourni au circuit 9 pour l'initialisation des fonctions de déclenchement.

Le dispositif de mémorisation comporte un circuit 11 de mémorisation comprenant une diode Dm, un condensateur Cm de mémorisation et une résistance Rm. La diode Dm est connectée entre une première entrée du circuit 11 recevant un signal de mesure VM, et une première extrémité du condensateur Cm. La seconde extrémité du condensateur Cm est connectée à une seconde entrée VO du circuit 11 servant de masse de référence électrique. La résistance Rm est connectée en parallèle sur le condensateur. La charge du condensateur se fait avec un courant fort Ih, avant le déclenchement du disjoncteur. Le courant Ih est fourni par une ligne d'alimentation Vdd à travers un interrupteur 12, contrôlé par le circuit 9, et une résistance Rh. L'évaluation de la charge du condensateur se fait en mesurant la tension VM aux bornes du circuit 11. En effet, la tension Vm est représentative de la tension VC aux bornes du condensateur Cm, Vm = VC + VD, VD étant la tension directe de Dm. La diode Dm empêchant le retour du courant, la charge est mesurée en injectant un courant Ib très faible pendant la mesure de la tension VM. Le courant Ib est fourni par la ligne Vdd à travers un interrupteur 13, contrôlé par le circuit 9, et une résistance Rb. Le dispositif comporte également un comparateur 14 permettant de comparer la valeur de la tension VM à un seuil VS de référence. La sortie du comparateur fournit le signal 10 indiquant l'état thermique du réseau à protéger.

Le fonctionnement du dispositif de mémorisation est décrit ci-après. Lorsqu'un défaut thermique est détecté avant un déclenchement, l'interrupteur 12 est fermé et le condensateur est chargé rapidement avec un courant fort Ih à environ la tension de Vdd. Lorsque le disjoncteur est ouvert, le déclencheur ne fonctionne plus, la diode Dm empêche la décharge du condensateur Cm dans les circuits du déclencheur, et le condensateur se décharge uniquement dans la résistance Rm de forte valeur. Après réenclenchement du disjoncteur, le déclencheur est initialisé. Un très faible courant Ib est injecté, pendant une période prédéterminée de mesure, dans le circuit 11 de manière à pouvoir mesurer la tension VM représentative de la charge du condensateur. Le signal VM est comparé au seuil VS. Si VM est supérieur à VS le comparateur transmet un signal représentatif d'un état chaud aux fonctions de déclenchement, dans le cas contraire il transmet un signal représentatif d'un état froid. La décharge du condensateur Cm dans la résistance Rm simule le refroidissement du réseau à protéger.

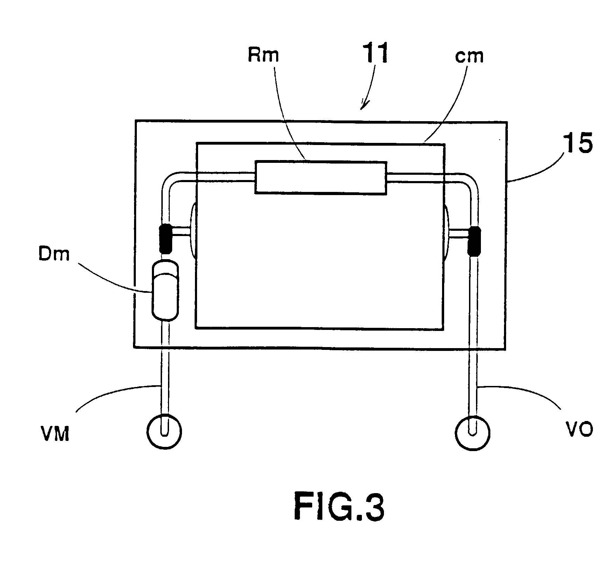

Les circuits imprimés des déclencheurs peuvent présenter des résistances de fuite, notamment lors de contraintes climatiques, qui pourraient accélérer la décharge du condensateur. Pour pallier à cet inconvénient, dans un mode de réalisation préférentiel, les composants du circuit 11 sont séparés du circuit principal de l'ensemble de traitement. Ils peuvent être avantageusement enrobés par un matériau isolant et être connectés au circuit imprimé par les deux entrées VM et VO. Un mode de réalisation d'un circuit de mémorisation enrobé est montré sur la figure 3. Les composants sont soudés directement entre eux. L'enrobage du circuit forme un boitier pouvant être obtenu par trempage ou par moulage. Dans ce mode de réalisation, le circuit 11 forme un composant homogène pouvant être directement implanté sur le circuit imprimé de l'ensemble du traitement. L'enrobage du circuit permet également de changer la technologie du condensateur Cm. Lorsqu'il est monté directement sur le circuit imprimé, il doit être de forte valeur pour compenser les risques de décharge rapide. Les condensateurs en technologie tantale solide ou gélifiée sont les plus utilisés. Avec l'enrobage il est possible de réduire la valeur de la capacité et d'utiliser des condensateurs à film plastique, par exemple polycarbonate ou polyester. Ce changement de technologie augmente encore la fiabilité du circuit de mémorisation.

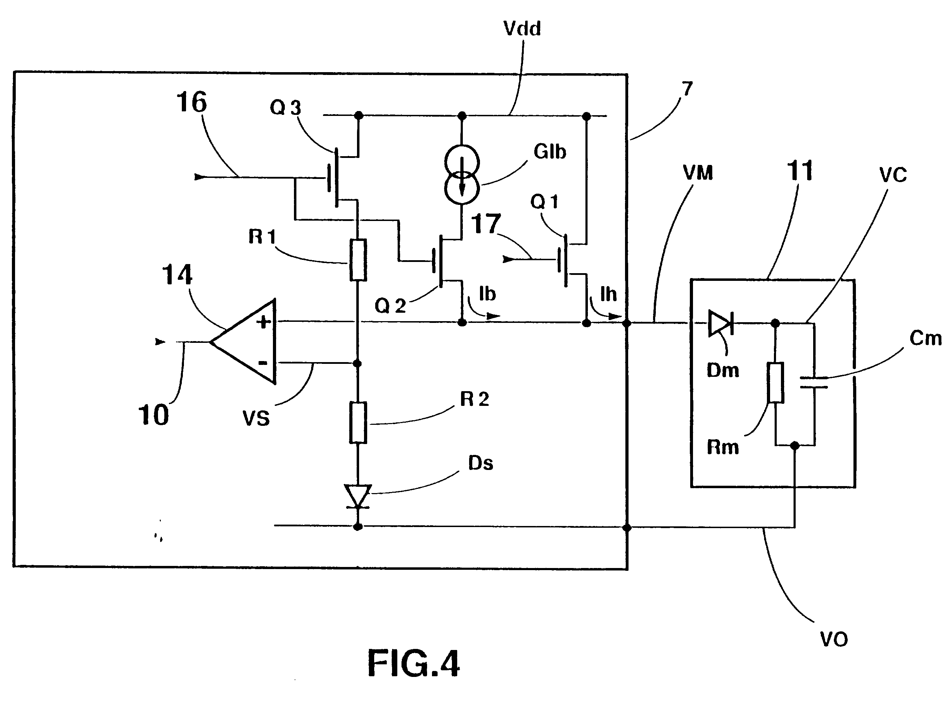

La figure 4 montre un développement du mode de réalisation de la figure 2. Les interrupteurs 12 et 13 sont constitués par des transistors respectivement Q1 et Q2. Le courant fort Ih est limité par les caractéristiques à l'état passant du transistor Q1 pendant la commande du transistor par une ligne 17. Le courant faible Ib est limité par un générateur de courant GIb connecté entre la ligne d'alimentation Vdd et le transistor Q2. La tension du seuil VS est réalisée au moyen d'un pont diviseur comportant un transistor Q3, deux résistances R1 et R2 et une diode DS. Le transistor Q3 et la résistance R1 sont connectés en série entre la ligne Vdd et l'entrée Vs du comparateur 14. La résistance R2 et la diode Ds sont connectées en série entre l'entrée Vs et la masse de référence VO. Les transistors Q2 et Q3 sont commandés en même temps par une ligne de commande commune de manière à générer la tension de seuil VS uniquement pendant la mesure de la tension VM aux bornes du circuit de mémorisation. La diode Ds sert à compenser la chute de tension dans la diode Dm ainsi que les variations de tension en fonction de la température.

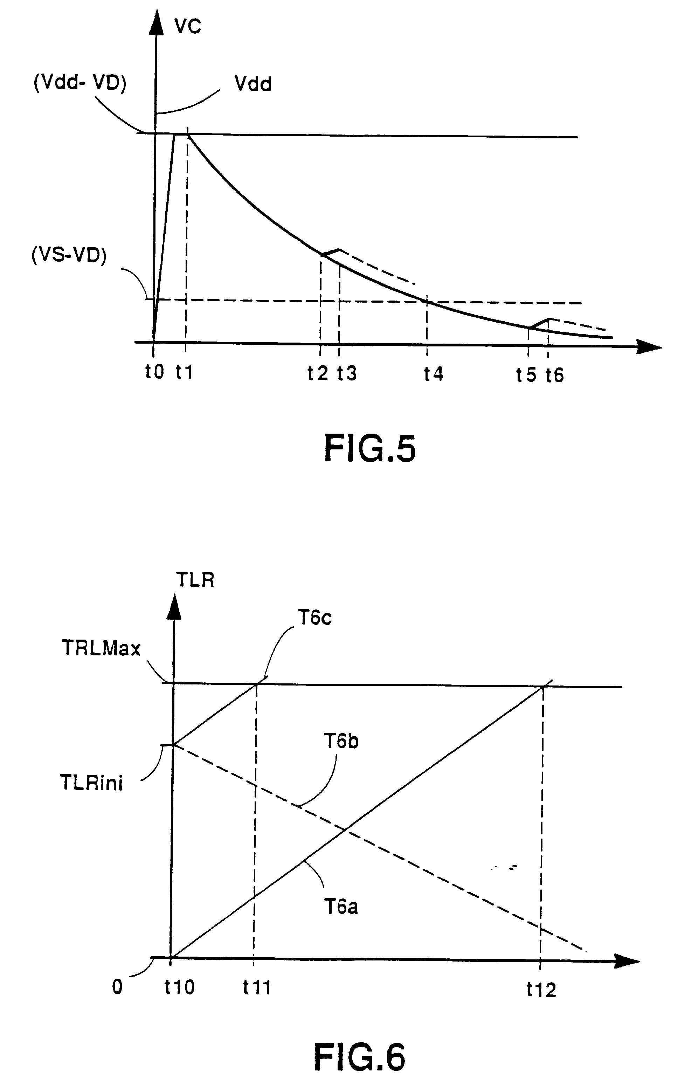

L'évolution de la charge du condensateur est illustrée sur la figure 5. Pendant l'injection des courants Ih et Ib l'écart de tension entre la tension VM aux bornes du circuit 11 et la tension VC aux bornes du condensateur est égale à une tension directe VD de la diode Dm.

Entre les instants t0 et t1 le condensateur est chargé par le courant fort Ih à une tension voisine de Vdd (Vdd-VD). A l'instant tl le disjoncteur est ouvert et le condensateur Cm se décharge avec une constante de temps Rm Cm. Si le disjoncteur est fermé à l'instant t2, la charge de Cm est mesurée en injectant le courant Ib très faible pendant un temps très court et la tension VM = VC + VD est supérieure à la tension VS, soit VC > VS - VD. Le comparateur 14 transmet une information représentative d'un état thermique chaud. Dans le cas où le disjoncteur n'est pas fermé à l'instant t2, le condensateur continue à se décharger et à l'instant t4 la charge du condensateur devient inférieure au seuil, soit VC < VS - VD. En refermant le disjoncteur à un instant t5 postérieur à t4, la mesure du courant entre l'instant t5 et t6 produit en sortie du comparateur 14 une information représentative d'un état thermique froid.

La figure 6 illustre l'initialisation d'une grandeur

TLR représentative de l'état thermique. Si, à l'initialisation, la tension VM est inférieure à VS ou VC inférieure à VS - VD, comme dans les instants ultérieurs à t4 sur la figure 5, la grandeur TLR est initialisée à une valeur minimale, par exemple zéro. Un défaut thermique peut faire croître cette grandeur jusqu'à une valeur maximale TLR Max. pour produire un déclenchement avec un délai maximum (courbe T6a) entre des instants t10 et t12. Si au contraire, à l'initialisation, la tension VM est supérieure au seuil VS, un état chaud est détecté et la grandeur TLR est initialisée à une valeur intermédiaire TLRini située entre la valeur minimale 0 et la valeur maximale TLR Max. La grandeur TLR peut alors décroître (courbe T6b) s'il n'y a pas de défaut thermique, ou croître (courbe T6c), en présence d'un défaut thermique, jusqu'à la valeur maximale TLRMax pour produire un déclenchement. Dans le deuxième cas de fonctionnement, le délai de déclenchement est plus court, entre l'instant t10 et un instant t11.

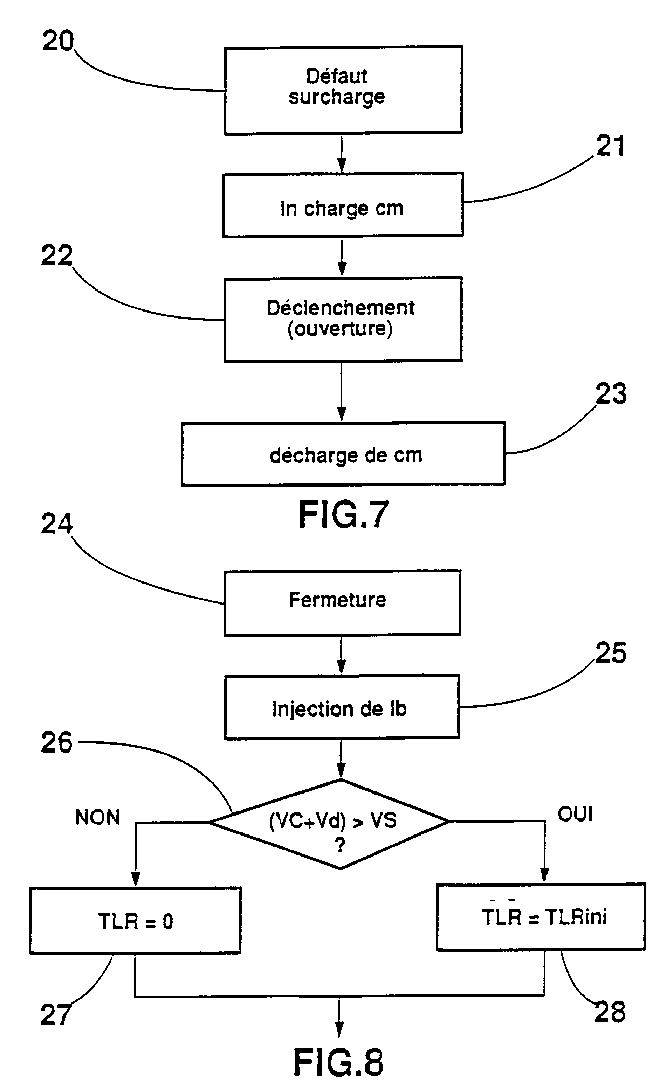

Un organigramme du fonctionnement du dispositif de mémorisation selon les figures 3 et 4 est illustré sur les figures 7 et 8 correspondant respectivement à l'ouverture et à la fermeture du disjoncteur. A la fin d'une étape 20, si un défaut en surcharge est détecté, une phase de déclenchement commence. Le courant fort Ih charge rapidement le condensateur Cm pendant une étape 21. Ensuite le déclencheur ordonne l'ouverture du disjoncteur dans une étape 22. Après ouverture, pendant une étape 23 le condensateur se décharge, simulant un refroidissement. Sur la figure 8, après la fermeture du disjoncteur (étape 24) le courant faible Ib est injecté (étape 25) pour déterminer la charge du condensateur Cm, lors d'une comparaison (étape 26). Si la tension VM ou VC + Vd est inférieure au seuil VS la grandeur TLR est initialisée à la valeur minimum 0 (étape 27). Si le résultat de la comparaison est positif, (VC + Vd) > Vs, un état chaud est détecté et la grandeur TLR est initialisée à une valeur intermédiaire TLRini dans une étape 28.

Le délai Tm provoquant le passage d'un état chaud à un état froid, correspondant au temps écoulé entre l'instant t1 d'ouverture du disjoncteur et un instant t4 où la tension Vc devient inférieure à la tension VS - VD, est donné par l'expression :

$$Tm = Rm\ Cm\ \ln\left((Vdd - Vd1) / (VS - Vd2)\right) \qquad (1)$$

où 1n est le logarithme naturel, Vd1 est la tension directe de la diode Dm traversée par le courant fort Ih et Vd2 est la tension de la diode Dm traversée par le courant faible Ib.

Pour une tension Vdd de 5V, une tension VS de 1V des tensions de diode Vd1 et Vd2 respectivement égales à 0,6 V et 0,4 V, un condensateur Cm tantale de 68 μF et une résistance Rm de 4,7 MΩ, le délai Tm a une valeur approximative de 10 minutes. Le condensateur au tantale peut être avantageusement remplacé par un condensateur à film plastique de 2,2 µF. La valeur de la résistance est alors portée à 100 MΩ et la valeur de Tm serait d'environ 8 minutes.

Le courant Ib est de l'ordre de 1 µA à 100 µA pendant environ 200 µs alors que le courant Ih est de préférence supérieur à 1 mA.

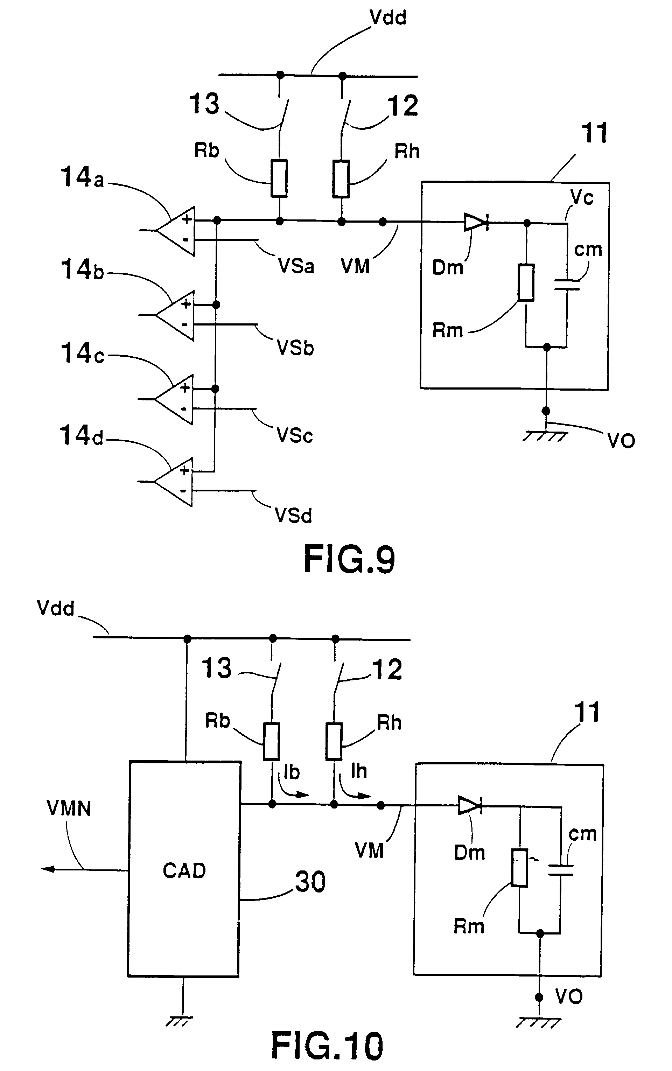

Un autre mode de réalisation est représenté sur la figure 9. Il permet une initialisation plus précise de la grandeur TLR représentative de l'état thermique du réseau à protéger. Le comparateur 14 est remplacé par quatre comparateurs 14a, 14b, 14c et 14d qui comparent la tension VM à quatre seuils respectivement Vsa, Vsb, Vsc et Vsd. Si les valeurs des seuils sont réparties de manière croissante, Vsa > Vsb > Vsc > Vsd, la grandeur TLR peut prendre une valeur parmi cinq à l'initialisation. Une première valeur peut être 0 si VM < VSd. Une seconde valeur est TLRini1 si VSd < VM < VSc. Une troisième valeur est TLRini2 si VSc < VM < VSb. Une quatrième valeur est TLRini3 si VSb < VM < VSa, et une cinquième valeur est TLRini4 si VM > VSa.

La figure 10 montre un mode de réalisation différent. Les comparateurs 14 ou 14a - 14b sont remplacés par un convertisseur 30 analogique-numérique qui fournit une valeur numérique VMN de la tension VM pendant la mesure de la charge de VC lorsque le courant faible Ib est injecté. La valeur VMN est fournie aux fonctions de déclenchement 9 de l'unité de traitement pour le calcul de la valeur d'initialisation de la grandeur TLR. Dans un mode de calcul préférentiel, la valeur initiale de TLR peut être proportionnelle à la valeur numérique VMN.

Dans les modes de réalisation, décrits ci-dessus, les dispositifs sont intégrés dans un déclencheur pouvant être installé dans un disjoncteur, mais ils pourraient tout aussi bien faire partie d'autres dispositifs de protection électrique. Par exemple des dispositifs de commande et de protection des moteurs électriques peuvent contenir un dispositif selon l'invention.

Le circuit de mémorisation 11 comportant la diode Dm le condensateur Cm et la résistance Rm, peut être organisé de manière différente, sans que cela modifie le fonctionnement, par exemple la diode Dm pourrait être mise dans la connexion reliée à la masse VO, la cathode étant connectée au condensateur.

**Revendications**

1. Déclencheur électronique comportant un ensemble (7) de traitement, produisant un ordre de déclenchement (8) lorsque des courants d'un réseau à protéger dépassent des seuils prédéterminés pendant des temps prédéterminés, et un dispositif de mémorisation d'un déclenchement connecté à l'ensemble de traitement, le dispositif de mémorisation comportant un circuit de mémorisation (11) comportant deux bornes (VM, VO), une diode (Dm) connectée en série avec un condensateur (Cm) entre lesdites bornes et une résistance (Rm) connectée en parallèle sur ledit condensateur dispositif de mémorisation comportant des moyens (12, Rh; Q1) d'injection d'un courant fort (Ih) pour charger le condensateur à travers la diode avant déclenchement et des moyens (13, Rb, Q2, GIb) d'injection d'un courant faible à la mise en service du déclencheur, et des moyens de mesure de la tension (Rm) aux bornes du circuit de mémorisation (11), et en ce que le dispositif de mémorisation comporte des moyens (13, Rb; GIb, Q2) d'injection d'un courant faible pour charger le condensateur lors de la mise en service du déclencheur.

2. Déclencheur selon la revendication 1 caractérisé en ce que le circuit (11) de mémorisation est enrobé dans un matériau isolant.

3. Déclencheur selon l'une des revendications 1 et 2 caractérisé en ce que le dispositif de mémorisation comporte des moyens de comparaison entre un seuil de tension prédéterminé (VS) et la tension (VM) aux bornes du circuit de mémorisation.

4. Déclencheur selon la revendication 3 caractérisé en ce que le seuil de tension (VS) prédéterminé est généré en même temps que l'injection du courant faible (Ib).

5. Déclencheur selon l'une des revendications 3 et 4 caractérisé en ce que l'ensemble de traitement comporte des moyens d'initialisation d'une grandeur (TLR), représentative de l'état thermique du réseau à protéger, à une valeur minimale si à la mise en service du déclencheur la tension (VM) aux bornes du circuit de mémorisation est inférieure au seuil (VS) prédéterminé, et à une valeur intermédiaire (TL Rini), supérieure à la valeur minimale, si la tension (VM) aux bornes du circuit de mémorisation est supérieure au seuil prédéterminé.

6. Déclencheur selon l'une des revendications 3 à 5 caractérisé en ce que le dispositif de mémorisation comporte des moyens de compensation de la chute de tension dans la diode (Dm) du circuit (11) de mémorisation.

7. Déclencheur selon l'une quelconque des revendications 1 à 6 caractérisé en ce que le condensateur (Cm) est du type à film plastique.

8. Déclencheur selon la revendication 5 caractérisé en ce que le dispositif de mémorisation comporte une pluralité de moyens (14a-14d) de comparaison ayant des seuils (VSa-VSd) prédéterminés différents, la grandeur représentative de l'état thermique étant initialisée à différentes valeurs selon le résultat des comparaisons.

9. Déclencheur selon l'une des revendications 1 et 2 caractérisé en ce que le dispositif comporte un convertisseur (30) analogique-numérique pour mesurer la tension (VM) aux bornes du circuit de mémorisation.

**Patentansprüche**

1. Elektronischer Auslöser mit einer Verarbeitungsschaltung (7), die ein Auslösesignal (8) erzeugt, wenn die Ströme in einem zu schützenden Netz über eine bestimmte Zeitdauer hinweg bestimmte Schwellwerte überschreiten, sowie einer mit der Verarbeitungsschaltung verbundenen Auslösespeichervorrichtung, welche Speichervorrichtung eine Speicherschaltung (11) mit einem Kondensator (Cm) und einem parallel zum genannten Kondensator (Cm) geschalteten Widerstand (Rm), Mittel (12, Rh, Q1) zur Einspeisung eines hohen Stroms zur Aufladung des Kondensators (Cm) vor der Auslösung sowie Mittel (14; 14a, 14b, 14c, 14d; 30) zur Messung der Spannung (VM) an den Klemmen der Speicherschaltung (11) bei Aktivierung des Auslösers umfaßt, dadurch gekennzeichnet, daß die Speicherschaltung (11) darüber hinaus eine, in Reihe mit dem Kondensator (Cm) und dem Widerstand (Rm) zwischen zwei Klemmen der Speicherschaltung (11) geschaltete Diode (Dm) umfaßt und daß die Speichervorrichtung Mittel (13, Rb, Glb, Q2) zur Einspeisung eines schwachen Stroms zur Aufladung des Kondensators bei Aktivierung des Auslösers umfaßt.

2. Auslöser nach Anspruch 1, dadurch gekennzeichnet, daß die Speicherschaltung (11) in einem Isolierstoff eingeschlossen ist.

3. Auslöser nach einem der Ansprüche 1 und 2, dadurch gekennzeichnet, daß die Speichervorrichtung Mittel zum Vergleich eines bestimmten Spannungsschwellwerts (VS) mit der Spannung (VM) an den Klemmen der Speicherschaltung umfaßt.

4. Auslöser nach Anspruch 3, dadurch gekennzeichnet, daß die Erzeugung des festgelegten Spannungsschwellwerts (VS) zum gleichen Zeitpunkt erfolgt wie die Einspeisung des schwachen Stroms (Ib).

5. Auslöser nach einem der Ansprüche 3 und 4, dadurch gekennzeichnet, daß die Verarbeitungsschaltung Initialisierungsmittel umfaßt, um eine den thermischen Anregungszustand des zu schützenden Netzes abbildenden Größe (TLR) auf einen Mindestanfangswert zu setzen, wenn bei der Aktivierung des Auslösers die Spannung (VM) an den Klemmen der Speicherschaltung unter dem festgelegten Schwellwert (VS) liegt, und auf einen, über dem Mindestanfangswert liegenden Zwischenanfangswert (TLR-ini) zu setzen, wenn die Spannung (VM) an den Klemmen der Speicherschaltung über dem festgelegten Schwellwert liegt.

6. Auslöser nach einem der Ansprüche 3 bis 5, dadurch gekennzeichnet, daß die Speichervorrichtung Mittel zur Kompensation des Spannungsabfalls über der Diode (Dm) der Speicherschaltung (11) umfaßt.

7. Auslöser nach irgendeinem der Ansprüche 1 bis 6, dadurch gekennzeichnet, daß der Kondensator (Cm) als Kunststoffolienkondensator ausgeführt ist.

8. Auslöser nach Anspruch 5, dadurch gekennzeichnet, daß die Speichervorrichtung mehrere Vergleichsmittel (14a-14d) mit unterschiedlichen festgelegten Schwellwerten (VSa-VSd) umfaßt, wobei die den thermischen Anregungszustand abbildende Größe je nach Ergebnis der Vergleiche auf unterschiedliche Werte initialisiert wird.

9. Auslöser nach einem der Ansprüche 1 und 2, dadurch gekennzeichnet, daß die Speichervorrichtung einen Analog-Digital-Konverter (30) zur Messung der Spannung (VM) an den Klemmen der Speicherschaltung umfaßt.

**Claims**

1. An electronic trip device comprising a processing unit (7) producing a tripping order (8) when currents of a power system to be protected exceed preset thresholds during preset times, and a trip storage device connected to the processing unit, the storage device comprising a storage circuit (11) with a capacitor (Cm) and a resistor (Rm) connected in parallel with said capacitor (Cm), means (12, Rh; Q1) for injecting a strong current to charge the capacitor (Cm) before tripping and means (14; 14a, 14b, 14c, 14d; 30) for measuring the voltage (VM) at the terminals of the storage circuit (11) when the trip device is put into operation, characterized in that the storage circuit (11) comprises in addition a diode (Dm) connected in series with the capacitor (Cm) and the resistor (Rm) between two terminals of the storage circuit (11), and that the storage device comprises means (13, Rb; Glb, Q2) for injecting a weak current to charge the capacitor when the trip device is put into operation.

2. The trip device according to claim 1, characterized in that the storage circuit (11) is coated in an insulating material.

3. The trip device according to one of the claims 1 and 2, characterized in that the storage device comprises comparison means for comparison between a preset voltage threshold (VS) and the voltage (VM) at the terminals of the storage circuit.

4. The trip device according to claim 3, characterized in that the preset voltage threshold (VS) is generated at the same time as the weak current (Ib) is injected.

5. The trip device according to one of the claims 3 and 4, characterized in that the processing unit comprises means for initialising a quantity (TLR), representative of the thermal state of the power system to be protected, at a minimum value if when the trip device is put into operation the voltage (VM) at the terminals of the storage circuit is lower than the preset threshold (VS), and at an intermediate value (TLRini), greater than the minimum value, if the voltage (VM) at the terminals of the storage circuit is greater than the preset threshold.

6. The trip device according to one of the claims 3 to 5, characterized in that the storage device comprises means for compensating the voltage drop in the diode (Dm) of the storage circuit (11).

7. The trip device according to any one of the claims 1 to 6, characterized in that the capacitor (Cm) is of the plastic film type.

8. The trip device according to claim 5, characterized in that the storage device comprises a plurality of comparison means (14a-14d) having different preset thresholds (VSa-VSd), the quantity representative of the thermal state being initialised at different values according to the results of the comparisons.

9. The trip device according to one of the claims 1 and 2, characterized in that the device comprises an analogue-to-digital converter (30) to measure the voltage (VM) at the terminals of the storage circuit.

FIG.1

**FIG.2**

EP 0 678 962 B1

FIG.3

**FIG.4**

EP 0 678 962 B1

FIG.5

FIG.6

**20**

Défaut
surcharge

**21**

In charge cm

**22**

Déclenchement
(ouverture)

**23**

décharge de cm

# FIG.7

**24**

Fermeture

**25**

Injection de Ib

**26**

NON     (VC+Vd) > VS ?     OUI

TLR = 0

TLR = TLRini

**27**

**28**

# FIG.8

FIG.9

FIG.10

14